# EUROPÄISCHE PATENTSCHRIFT

(11) **EP 0 796 689 B1**
(45) Veröffentlichungstag und Bekanntmachung des Hinweises auf die Patenterteilung: **12.12.2001**
(21) Anmeldenummer: 97890044.7
(22) Anmeldetag: 11.03.1997
(51) Int. Cl.: B23C 3/12, B23C 3/00, B23B 27/12

(54) **Vorrichtung zum spanabhebenden Bearbeiten einer streifenförmigen Werkstückfläche**
Device to work strip-like workpieces
Dispositif à usiner des pièces plates

(30) Priorität: 18.03.1996 AT 49896
(43) Veröffentlichungstag der Anmeldung: 24.09.1997
(73) Patentinhaber: Pomikacsek, Josef, Dipl.-Ing., 4813 Altmünster (AT)
(72) Erfinder: Pomikacsek, Josef, Dipl.-Ing., 4813 Altmünster (AT)
(74) Vertreter: Hübscher, Gerhard, Dipl.-Ing.

(56) Entgegenhaltungen:
- DE-A- 3 025 074
- DE-A- 3 538 345
- US-A- 1 534 157
- PATENT ABSTRACTS OF JAPAN vol. 18, no. 258 (M-1606), 17.Mai 1994 & JP 06 039633 A (MITSUBISHI ELECTRIC), 15.Februar 1994,

## Beschreibung

Die Erfindung bezieht sich auf eine Vorrichtung zum spanabhebenden Bearbeiten einer streifenförmigen Werkstückfläche mit wenigstens einem Rundmesserkopf, dessen Drehachse gegenüber der in Streifenlängsrichtung verlaufenden Vorschubrichtung unter einem spitzen Winkel geneigt angeordnet ist.

Zur spanabhebenden Bearbeitung streifenförmiger Werkstückflächen, wie sie sich beispielsweise bei der Bearbeitung der Schweißkanten von aus Blechbändern gefertigten Rohren, der Nachbearbeitung der Lauffläche von Bahnschienen oder beim Abtragen eines Schweißgrates ergeben, sind Hobelwerkzeuge an sich gut geeignet, doch haften üblichen Hobelwerkzeugen verschiedene Nachteile an. So können aufgrund der Dauerbelastung der Schneiden eines herkömmlichen Hobelmessers nur vergleichsweise geringe Standzeiten erzielt werden. Außerdem begrenzt die Spandicke und die damit verbundene mechanische Schneidenbelastung des Hobelwerkzeuges insbesondere bei sich ändernden Spandicken die zulässige Vorschubgeschwindigkeit.

Um die Standzeiten zu erhöhen, ist es bereits bekannt (DE 30 25 074 C2), als Hobelwerkzeug einen angetriebenen Rundmesserkopf mit einer durchgehenden, kreisförmigen Schneide vorzusehen, so daß bei einer entsprechenden Anstellung des Rundmesserkopfes an das Werkstück ein Hobelvorgang erzielt wird, bei dem die kreisförmige Schneide den Eingriffsbereich des Rundmesserkopfes kontinuierlich durchläuft, so daß sich die Messerbelastung über den Umfang des Rundmesserkopfes verteilt, was die Belastung des Rundmesserkopfes erheblich herabsetzt und seine Standzeit entsprechend vergrößert. Nachteilig bei diesem bekannten Rundmesserkopf ist allerdings, daß aufgrund der gegenüber der Längsachse der streifenförmigen Werkstückfläche geneigten Anstellung des Rundmesserkopfes die kreisförmige Schneide in einer Projektion bezüglich der Vorschubrichtung eine elliptische Umrißform aufweist, die mit einem durch den Eingriffsbereich der Schneide bestimmten Abschnitt das Profil der zu bearbeitenden, streifenförmigen Werkstückfläche bestimmt. Diese auf eine elliptische Profilierung beschränkte Bearbeitungsmöglichkeit grenzt das Einsatzgebiet eines solchen Rundmesserkopfes im wesentlichen auf das Anfasen oder Entgraten eines bandförmigen Werkstückes ein.

Der Erfindung liegt somit die Aufgabe zugrunde, diese Mängel zu vermeiden und eine Vorrichtung zum spanabhebenden Bearbeiten einer streifenförmigen Werkstückfläche der eingangs geschilderten Art mit einfachen Mitteln so zu verbessern, daß streifenförmige Werkstückflächen mit unterschiedlichem Sollprofil bearbeitet werden können, und zwar mit einem die Spandicke übersteigenden Werkstückabtrag.

Die Erfindung löst die gestellte Aufgabe dadurch, daß der Rundmesserkopf aus mehreren koaxial hintereinandergereihten Rundmessern besteht, deren Schneiden in einer Projektion in Vorschubrichtung eine dem Sollprofil des Werkstückstreifens entsprechende Hüllkurve aufweisen.

Durch die Anordnung mehrerer koaxialer Rundmesser hintereinander ergibt sich zufolge der Neigung des Rundmesserkopfes gegenüber der Vorschubrichtung ein gegenseitiger Versatz der einzelnen Rundmesser in Richtung der Breite des zu bearbeitenden Werkstückstreifens, so daß die einzelnen kreisförmigen Schneiden in einer Projektion in Vorschubrichtung eine elliptische Urißform aufweisen und sich diese Umrißellipsen über den zu zerspanenden Werkstückquerschnitt verteilen. Da die in Vorschubrichtung elliptische Umrißform der einzelnen Rundmesser das jeweilige Schnittflächenprofil bestimmt, werden durch die aufeinanderfolgend zum Einsatz gelangenden Rundmesser des Rundmesserkopfes Späne abgetragen, deren Querschnitt durch die in Vorschubrichtung gesehen elliptischen, gegeneinander versetzten Umrißlinien zweier unmittelbar aufeinanderfolgender Rundmesser begrenzt wird. Der die jeweilige Spandicke ergebende gegenseitige Abstand dieser in Vorschubrichtung projizierten Umrißlinien der Rundmesser hängt vom axialen Abstand der Rundmesser, der Neigung des Rundmesserkopfes gegenüber der Vorschubrichtung, dem Durchmesser der einzelnen Rundmesser und der jeweiligen Anstellung des Rundmesserkopfes gegenüber dem Werkstück ab und kann demnach über diese Parameter auch an die jeweiligen Anforderungen angepaßt werden.

Wegen der gegenseitigen Versetzung der in einer Projektion in Vorschubrichtung elliptischen Umrißlinien der Rundmesser wird die mit dem Rundmesserkopf bearbeitete Gesamtfläche des Werkstückes aus über die Breite der Gesamtfläche aufeinanderfolgenden Schnittflächenabschnitten der einzelnen Rundmesser gebildet, so daß sich für diese Gesamtfläche ein Profil ergibt, das der Hüllkurve der gegeneinander versetzten Umrißlinien der Rundmesser in Vorschubrichtung entspricht. Es kann daher jedes Sollprofil der zu bearbeitenden Werkstückfläche zumindest in guter Annäherung durch einen erfindungsgemäßen Rundmesserkopf nachgebildet werden, weil der gegenseitige axiale Abstand der Rundmesser sowie deren Anzahl und Größe im Zusammenhang mit der Neigung des Rundmesserkopfes gegenüber der Vorschubrichtung stets so gewählt werden können, daß die Hüllkurve der Schneiden in einer Projektion in Vorschubrichtung dem Sollprofil weitgehend entspricht.

Um besonders einfache Konstruktionsverhältnisse schaffen zu können, kann die Drehachse des aus Rundmessern gleichen Durchmessers aufgebauten Rundmesserkopfes in einer zur ebenen Werkstückfläche parallelen Ebene verlaufen. In diesem Fall schließen in einer Projektion in Vorschubrichtung die einzelnen Umrißellipsen der Rundmesser im Bereich der gemeinsamen Tangente aneinander an, was bei einer entsprechenden Durchmesserwahl für die Rundmesser und einem ausreichend spitzen Neigungswinkel gegenüber der Vorschubrichtung eine sehr gute Annäherung an eine im Querschnitt gerade Gesamtschnittfläche des Rundmesserkopfes erlaubt, weil ja die Umrißlinien in einem schleifenden Schnitt ineinander übergehen. Kann in diesem Zusammenhang die Neigung der Drehachse des Rundmesserkopfes gegenüber der Vorschubrichtung eingestellt werden, so eröffnet sich die Möglichkeit, die Bearbeitungstoleranzen an die jeweiligen Anforderungen anzupassen.

Wie bei allen Hobelvorgängen ergibt sich auch bei Rundmesserköpfen der erfindungsgemäßen Art das Problem der Späneabfuhr, weil ja im allgemeinen die Spanlänge der Vorschublänge entspricht. Um kürzere Späne zu erhalten, können die Rundmesser des Rundmesserkopfes in den Messerschneiden Ausnehmungen zur Spanunterbrechung aufweisen. Damit diese Schneidenausnehmungen zu keiner Beeinträchtigung der Schnittfläche führen, kann dem Rundmesserkopf mit den Schneidenausnehmungen ein Rundmesserkopf mit über den Umfang durchgehenden Messerschneiden nachgeordnet werden. Eine andere Möglichkeit. die Spanlänge auf vorbestimmte Werte zu beschränken, wird dadurch sichergestellt, daß wenigstens zwei in Abhängigkeit von der Vorschubgeschwindigkeit und dem gegenseitigen Abstand in Vorschubrichtung abwechselnd anstellbare Rundmesserköpfe in Vorschubrichtung hintereinander vorgesehen sind, so daß der vom in Vorschubrichtung vorderen Rundmesserkopf nicht abgetragene Werkstückflächenabschnitt durch einen der nachfolgenden Rundmesserköpfe abgetragen wird.

Damit die mit zylindrischen Rundmesserköpfen erreichbaren, besonders einfachen Konstruktionsverhältnisse auch für die Bearbeitung von streifenförmigen, profilierten Werkstückflächen ausgenützt oder Sollprofile bearbeitet werden können, die formbedingt nicht durch ein Rundmesserkopfprofil angenähert werden können, können in weiterer Ausbildung der Erfindung wenigstens zwei gegeneinander quer zur Vorschubrichtung versetzte Rundmesserköpfe in Vorschubrichtung hintereinander vorgesehen sein. Bei zylindrischen Rundmesserköpfen kann durch diese Maßnahme das zu bearbeitende Profil durch einen Polygonzug nachgebildet werden, während die Aufeinanderfolge zweier profilierter Rundmesserköpfe die Bearbeitung von Profilformen erlaubt, deren Nachbildung z. B. Rundmesser mit unterschiedlicher Neigung der Drehachse erfordert.

In der Zeichnung ist der Erfindungsgegenstand beispielsweise dargestellt. Es zeigen
- Fig. 1: ein Ausführungsbeispiel einer erfindungsgemäßen Vorrichtung zum spanabhebenden Bearbeiten einer streifenförmigen Werkstückfläche in einer schematischen Seitenansicht,
- Fig. 2: diese Vorrichtung in einer Ansicht in Vorschubrichtung des Werkstückes,
- Fig. 3: die Spanbildung bei einer Vorrichtung nach Fig. 1 an Hand eines Werkstückquerschnittes in einem größeren Maßstab, die
- Fig. 4 und 5: eine den Fig. 1 und 2 entsprechende Darstellung einer Konstruktionsvariante,
- Fig. 6: eine Draufsicht auf eine weitere Ausführungsform einer erfindungsgemäßen Vorrichtung mit vier abwechselnd anstellbaren Rundmesserköpfen,
- Fig. 7: ein weiteres Ausführungsbeispiel einer erfindungsgemäßen Vorrichtung zum Bearbeiten eines Laufflächenprofils einer Bahnschiene in einer schematischen Ansicht in Schienenlängsrichtung,
- Fig. 8: die Vorrichtung nach der Fig. 7 in einer Draufsicht, die
- Fig. 9 und 10: eine den Fig. 7 und 8 entsprechende Darstellung einer Ausführungsvariante einer Vorrichtung zur Bearbeitung der Fahrkante einer Bahnschiene und
- Fig. 11: ein weiteres Ausführungsbeispiel einer erfindungsgemäßen Vorrichtung zur Schienenkopfbearbeitung mit zylindrischen Rundmesserköpfen.

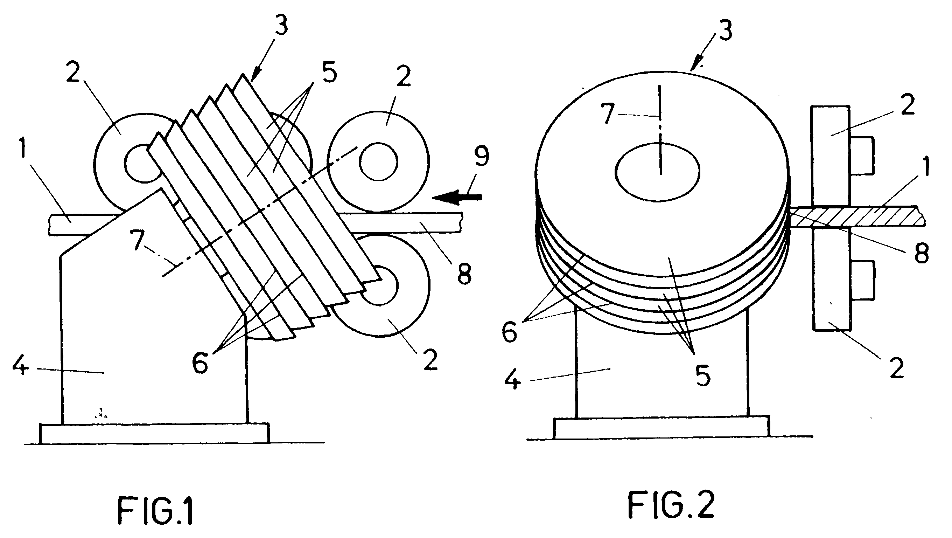

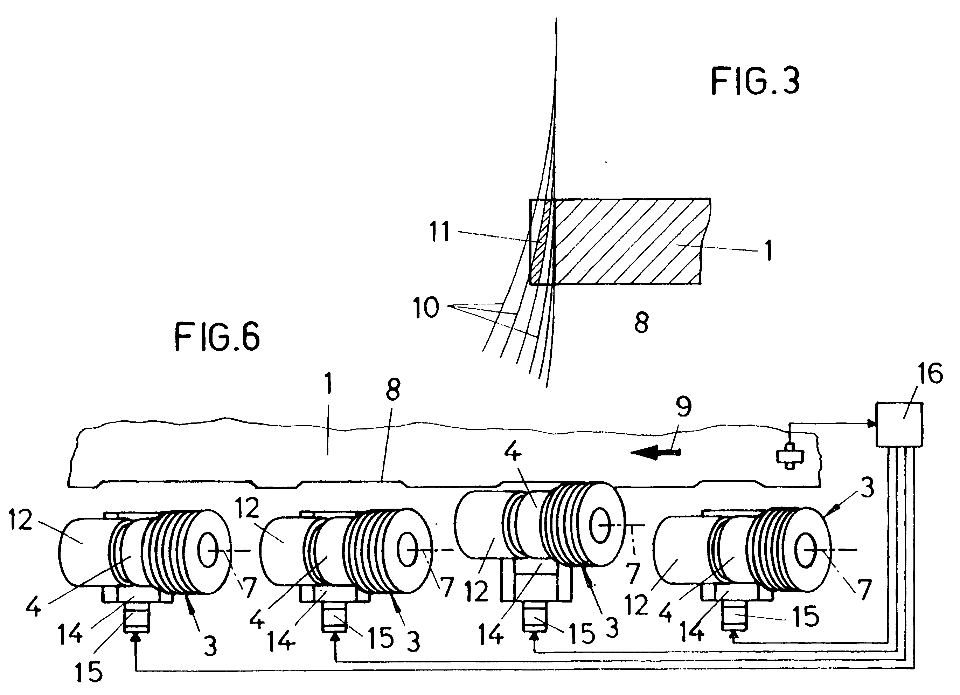

In den Fig. 1 und 2 ist eine Vorrichtung zum Bearbeiten der Längsseitenflächen eines Blechbandes 1 dargestellt, das mit Hilfe von Führungsrollen 2 an einem Rundmesserkopf 3 vobeigefördert wird. Dieser Rundmesserkopf 3 ist in einem Gestell 4 frei drehbar gelagert und setzt sich aus einzelnen untereinander gleichen, koaxial hintereinandergereihten Rundmessern 5 mit einer über den Umfang durchgehenden, kreisförmigen Schneide 6 zusammen. Die Drehachse 7 dieses in seiner Grundform kreiszylindrischen Rundmesserkopfes 3 verläuft parallel zu der zu bearbeitenden, durch die Längsseitenfläche des Blechbandes 1 gebildeten, streifenförmigen Werkstückfläche 8, ist aber zur Vorschubrichtung 9 des Blechbandes 1 gegenüber dem Rundmesserkopf 3 unter einem spitzen Winkel geneigt, wie dies der Fig. 1 entnommen werden kann. Aufgrund dieser Anordnung weisen die Rundmesser 5 in einer Projektion in Vorschubrichtung entsprechend der Fig. 2 eine elliptische Umrißform auf, wobei diese gegeneinander versetzten Umrißellipsen im Bereich ihrer gemeinsamen Tangenten in einem schleifenden Schnitt ineinander übergehen. Da die Projektion der Schneiden 6 in Vorschubrichtung 9 das jeweilige Schnittprofil dieser Schneiden 6 bestimmt, ergeben sich Schnittverhältnisse, wie sie in der Fig. 3 näher dargestellt sind. Den einzelnen Rundmessern 5 können Schnittflächen entsprechend ihren Umrißellipsen 10 zugeordnet werden, so daß sich für die anfallenden Späne ein Querschnitt ergibt, der im wesentlichen durch die Umrißellipsen 10 zweier unmittelbar aufeinanderfolgender Rundmesser 5 begrenzt wird, wie dies in der Fig. 3 beispielsweise für einen Span 11 veranschaulicht ist. Die Spandicke hängt dabei von der Größe der Umrißellipsen und von deren gegenseitiger Versetzung ab, die wiederum durch den axialen Abstand der Rundmesser 5 voneinander und den Neigungswinkel der Drehachse 7 gegenüber der Vorschubrichtung 9 vorgegeben wird. Die jeweilige Spandicke kann folglich in einfacher Weise unabhängig vom zu zerspanenden Querschnitt entsprechend den günstigsten Schnittbedingungen gewählt werden. Außerdem bildet der schleifende Übergang der Umrißellipsen 10 im Scheitelbereich eine die resultierende Schnittfläche des Rundmesserkopfes 3 bestimmende Hüllkurve, die eine gute Annäherung an die gemeinsame Tangente der Umrißellipsen darstellt, insbesondere bei einem ausreichend großen Durchmesser der Rundmesser 5, so daß sich trotz des Einsatzes eines Rundmesserkopfes 3 Werkstückflächen mit einem geraden Sollprofil bearbeiten lassen.

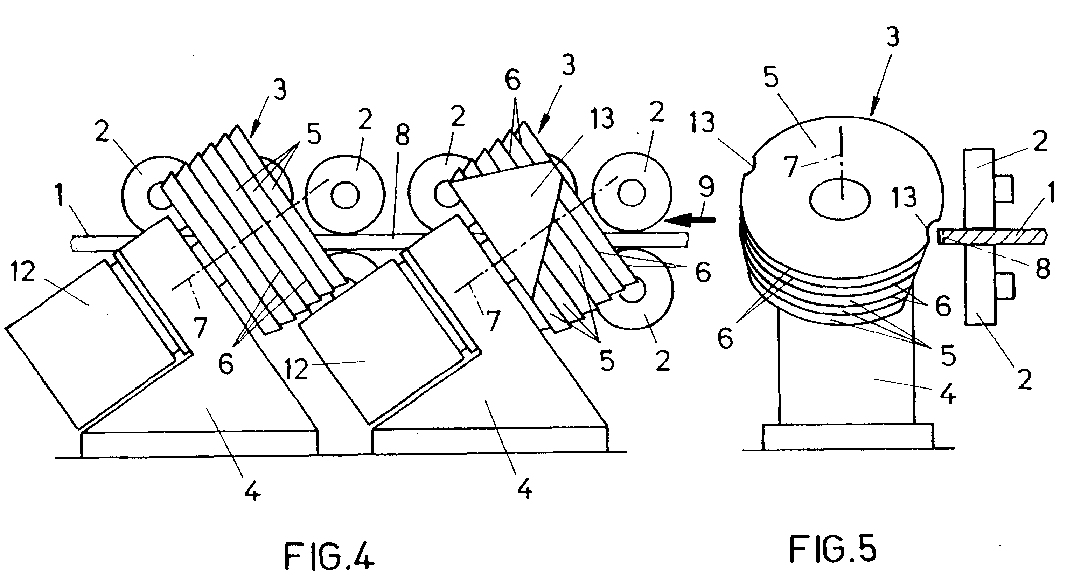

Während die Drehung des frei drehbar gelagerten Rundmesserkopfes 3 nach der Fig. 1 über das durch die Schnittkräfte bedingte Reaktionsdrehmoment sichergestellt wird, werden die beiden in Vorschubrichtung 9 hintereinander angeordneten Rundmesserköpfe 3 nach den Fig. 4 und 5 jeweils durch einen Motor 12 angetrieben. Die Rundmesser 5 des in Vorschubrichtung 9 vorgeordneten Rundmesserkopfes 3 weisen in den Schneiden 6 Ausnehmungen 13 zur Spanunterbrechung auf, nicht aber die des nachgeordneten Rundmesserkopfes 3, so daß durch den nachgeordneten Rundmesserkopf 3 der durch die Schneidenausnehmungen 13 bedingte Überstand der Werkstückfläche 8 abgetragen wird.

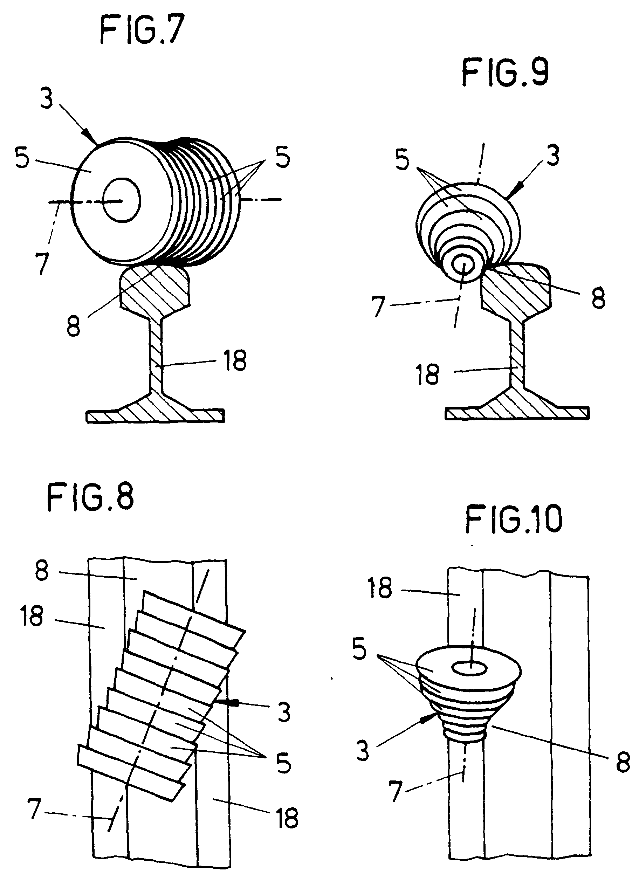

Eine andere Möglichkeit, eine Zerspanung mit begrenzter Spanlänge zu erreichen, ist in der Fig. 6 dargestellt, gemäß der beispielsweise vier gleiche Rundmesserköpfe 3 eingesetzt werden, die abwechseln zum Einsatz kommen, und zwar so, daß die einzelnen Rundmesserköpfe 3 die Werkstückfläche 8 in einer jeweils gleichen Länge bearbeiten. Zu diesem Zweck sind Rundmesserköpfe 3 auf Schlitten 14 angeordnet, die über Stelltriebe 15 voneinander unabhängig verstellt werden können. Die Ansteuerung dieser Stelltriebe 15 erfolgt über eine Steuereinrichtung 16 in Abhängigkeit vom gegenseitigen Abstand der Rundmesserköpfe in Vorschubrichtung 9 und von der Vorschubgeschwindigkeit. Während der gegenseitige Abstand konstruktiv vorgegeben ist, muß die jeweilige Ist-Vorschubgeschwindigkeit mittels eines Fühlers 17, beispielsweise einer Meßrolle, erfaßt und der Steuereinrichtung 16 als Führungsgröße vorgegeben werden, um die jeweiligen Anstellzeiten für die einzelnen Rundmesserköpfe 3 im Sinne einer gleichmäßigen Aufteilung der Werkstückbearbeitung auf alle Rundmesserköpfe 3 ermitteln zu können.

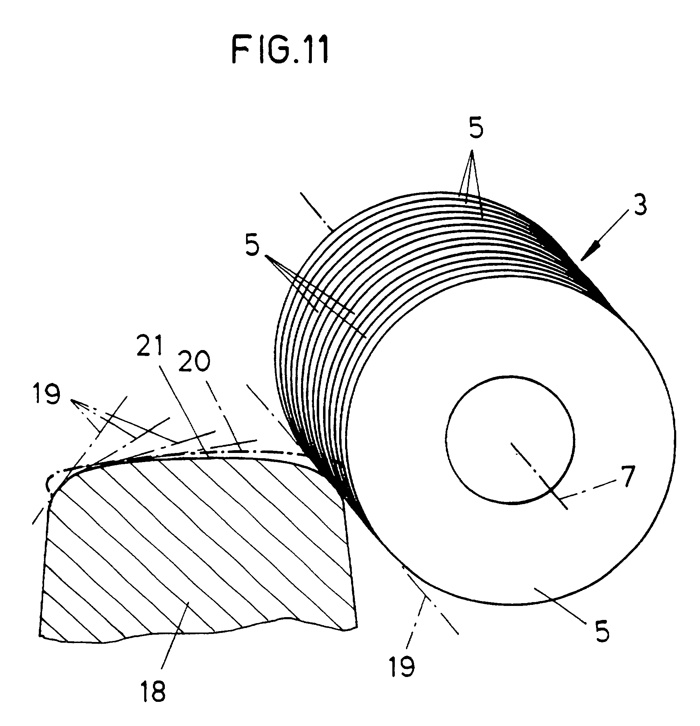

Die Hüllkurve der Umrißellipsen der einzelnen Rundmesser 5 in einer Projektion in Vorschubrichtung 9 braucht sich keineswegs an eine Gerade anzuschmiegen. Die Rundmesserköpfe 3 nach den Fig. 7 und 8 einerseits sowie nach den Fig. 9 und 10 anderseits zeigen dies anschaulich. Durch eine geeignete gegenseitige Abstimmung der Schneidendurchmesser und -abstände aufeinanderfolgender Rundmesser 5 ergeben sich bei einer entsprechenden Neigung eines solchen Rundmesserkopfes 3 gegenüber der Vorschubrichtung 9 für die Umrißellipsen Hüllkurven, die eine Bearbeitung von profilierten Werkstückflächen 8 unterschiedlicher Form zulassen. Im Ausführungsbeispiel nach den Fig. 7 und 8 ist die Bearbeitung der die Werkstückfläche 8 bildenden Fahrfläche einer Bahnschiene 18 mit Hilfe eines entsprechend profilierten Rundmesserkopfes 3 zu erkennen. Die Bearbeitung der inneren bzw. der äußeren Fahrkante einer solchen Bahnschiene 18 geht aus den Fig. 9 und 10 hervor. Es ist aber keineswegs erforderlich, solche profilierte Werkstückflächen 8 mit Hilfe eines profilierten Rundmesserkopfes 3 zu bearbeiten. Es können hiefür auch vorteilhaft zylindrische Rundmesserköpfe 3 eingesetzt werden, wenn das Sollprofil durch einen entsprechenden Polygonzug angenähert werden kann. In der Fig. 11 ist die Schienenkopfbearbeitung mit einem solchen zylindrischen Rundmesserkopf 3 veranschaulicht. Die sich im Eingriffsbereich des Werkzeuges in einer Projektion in Vorschubrichtung ergebende gemeinsame Tangente 19 der Umrißellipsen der Rundmesser 5 bestimmt die Schnittfläche, so daß beispielsweise durch mehrere in Vorschubrichtung hintereinander angeordnete zylindrische Rundmesserköpfe 3, die gegeneinander quer zur Vorschubrichtung versetzt sind und eine an den jeweiligen Sollverlauf der Werkstückfläche 8 angepaßte Neigung aufweisen, eine entsprechende Laufflächenbearbeitung mit dem Vorteil vorgenommen werden kann, daß durch eine entsprechende Neigungsverstellung der Rundmesserköpfe 3 das zu bearbeitende Sollprofil in Abhängigkeit von den jeweiligen Anforderungen sogar während des Zerspanungsvorganges geändert werden kann. In der Fig. 11 ist das lstprofil des Schienenkopfes im Bereich der Fahrfläche mit 20 bezeichnet. Das zu bearbeitende Sollprofil 21 kann nunmehr über entsprechend geneigte Rundmesserköpfe 3 angenähert werden, deren Schnittflächenverlauf durch die in einer Projektion in Vorschubrichtung gemeinsamen Tangenten 19 der Umrißellipsen der einzelnen Rundmesser 5 jedes Rundmesserkopfes 3 abgebildet wird.

## Patentansprüche

1. Vorrichtung zum spanabhebenden Bearbeiten einer streifenförmigen Werkstückfläche (8) mit wenigstens einem Rundmesserkopf (3), dessen Drehachse (7) gegenüber einer in Streifenlängsrichtung verlaufenden Vorschubrichtung (9) unter einem spitzen Winkel geneigt angeordnet ist, **dadurch gekennzeichnet, daß** der Rundmesserkopf (3) aus mehreren koaxial hintereinandergereihten Rundmessern (5) besteht, deren Schneiden (6) in einer Projektion in Vorschubrichtung (9) eine dem Sollprofil des Werkstückstreifens (8) entsprechende Hüllkurve aufweisen.

2. Vorrichtung nach Anspruch 1, **dadurch gekennzeichnet, daß** die Drehachse (7) des aus Rundmessern (5) gleichen Durchmessers aufgebauten Rundmesserkopfes (3) in einer zur ebenen Werkstückfläche (8) parallelen Ebene verläuft.

3. Vorrichtung nach Anspruch 1 oder 2, **dadurch gekennzeichnet, daß** die Neigung der Drehachse (7) des Rundmesserkopfes (3) gegenüber der Vorschubrichtung (9) einstellbar ist.

4. Vorrichtung nach einem der Ansprüche 1 bis 3, **dadurch gekennzeichnet, daß** die Rundmesser (5) des Rundmesserkopfes (3) in den Messerschneiden (6) Ausnehmungen (13) zur Spanunterbrechung aufweisen.

5. Vorrichtung nach Anspruch 4, dadurch gekennezichnet, daß dem Rundmesserkopf (3) mit den Ausnehmungen (13) in den Messerschneiden (6) ein Rundmesserkopf (3) mit über den Umfang durchgehenden Messerschneiden (6) nachgeordnet ist.

6. Vorrichtung nach einem der Ansprüche 1 bis 3, **dadurch gekennzeichnet, daß** wenigstens zwei in Abhängigkeit von der Vorschubgeschwindigkeit und dem gegenseitigen Abstand in Vorschubrichtung (9) abwechselnd anstellbare Rundmesserköpfe (3) in Vorschubrichtung (9) hintereinander vorgesehen sind.

7. Vorrichtung nach einem der Ansprüche 1 bis 6 **dadurch gekennzeichnet, daß** wenigstens zwei gegeneinander quer zur Vorschubrichtung (9) versetzte Rundmesserköpfe (3) in Vorschubrichtung (9) hintereinander vorgesehen sind.

## Claims

1. A device for machining the surface (8) of a workpiece in the form of a strip by chip removal, the device comprising at least one revolving-blade head (3) having its axis of rotation (7) at an acute angle to a direction of advance (9) in the longitudinal direction of the strip, **characterised in that** the head (3) comprises a number of coaxial revolving blades (5) in line, the cutting edges (6) whereof, in projection in the direction of advance (9), have an envelope curve corresponding to the set profile of the workpiece strip (8).

2. A device according to claim 1, **characterised in that** the axis of rotation (7) of the head (3), made up of revolving blades (5) having the same diameter, extends in a plane parallel to the flat workpiece surface (8).

3. A device according to claim 1 or 2, **characterised in that** the angle of the axis of rotation (7) of the head (3) to the direction of advance (9) is adjustable.

4. A device according to any of claims 1 to 3, **characterised in that** the revolving blades (5) of the head (3) have recesses (13) in the blade edges (6) for breaking the chips.

5. A device according to claim 4, **characterised in that** the revolving-blade head (3) with the recesses (13) in the blade edges (6) is followed by a revolving-blade head (3) with blade edges (6) continuous around the periphery.

6. A device according to any of claims 1 to 3, **characterised in that** at least two revolving-blade heads (3) are disposed one behind the other in the direction of advance (9) and can be alternately adjusted in dependence on the speed of advance and the distance between them in the direction of advance (9).

7. A device according to any of claims 1 to 6, **characterised in that** at least two revolving-blade heads (3) offset from one another transversely to the direction of advance (9) are provided one behind the other in the direction of advance (9).

## Revendications

1. Dispositif d'usinage, avec enlèvement de copeaux, d'une face de pièce façonnée (8) en forme de bande, avec au moins une tête à lame ronde (3), dont l'axe de rotation (7) est incliné sous un angle aigu par rapport à un dispositif d'avancement (9) s'étendant dans la direction longitudinale de la bande, **caractérisé par le fait que** la tête à lame ronde (3) est constituée de trois lames rondes (5) alignées coaxialement l'une derrière l'autre, dont les tranchants (6) présentent, en projection dans la direction d'avancement (9), une courbe enveloppe correspondant au profil théorique de la bande de pièce façonnée (8.

2. Dispositif selon la revendication 1, **caractérisé par le fait que** l'axe de rotation (7) de la tête de lame ronde (3), constituée de lames rondes (5) de diamètre identique, s'étend dans un plan parallèle à la surface de pièce façonnée (8) plane.

3. Dispositif selon la revendication 1 ou 2, **caractérisé par le fait que** l'inclinaison de l'axe de rotation (7) de la tête de lame ronde (3) par rapport à la direction d'avancement (9) est réglable.

4. Dispositif selon l'une des revendications 1 à 3, **caractérisé par le fait que** les lames rondes (5) de la tête à lame ronde (3) présentent dans les tranchants de lame (6) des évidements (13) pour interrompre la production de copeaux.

5. Dispositif selon la revendication 4, **caractérisé par le fait que**, en aval de la tête à lame ronde (3) munie des évidements (13) dans les tranchants de lame (6), est disposée une tête à lame ronde (3) ayant des tranchants de lame (6) continus sur toute la périphérie.

6. Dispositif selon l'une des revendications 1 à 3, **caractérisé par le fait qu'**au moins deux têtes à lame ronde (3), pouvant être calées angulairement alternativement, en fonction de la vitesse d'avancement et de l'espacement mutuel dans la direction d'avancement (9), sont prévues l'une derrière l'autre dans la direction d'avancement (9).

7. Dispositif selon l'une des revendications 1 à 6, **caractérisé par le fait qu'**au moins deux têtes à lame ronde (3), décalées l'une par rapport à l'autre transversalement par rapport à la direction d'avancement (9), sont prévues l'une derrière l'autre dans la direction d'avancement (9).
